(19)

Europäisches
Patentamt
European
Patent Office
Office européen
des brevets

(11) **EP 2 157 828 A1**

(12) **EUROPEAN PATENT APPLICATION**

(43) Date of publication:
**24.02.2010 Bulletin 2010/08**

(51) Int Cl.:
**H04W 74/08** (2009.01)

(21) Application number: **08014619.4**

(22) Date of filing: **18.08.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventors:<br> • **Horneman, Kari**<br>  **90800 Oulu (FI)**<br> • **Luo, Jijun, Dr.**<br>  **81549 München (DE)** |
| (71) Applicant: **Nokia Siemens Networks OY**<br>**02610 Espoo (FI)** | (74) Representative: **Bruglachner, Thomas E.**<br>**Nokia Siemens Networks Oy**<br>**COO RTP IPR / Patent Administration**<br>**80240 Munich (DE)** |

(54) **Method, mobile device and communication system for determining the availability of a communication resource in a frequency spectrum**

(57)    A method (10) and a communication device (90) for determining (15) the availability of a communication resource (25) in a frequency spectrum is described, comprising determining a low frequency (20), a high frequency (21), a scanning frequency (22) being determined randomly and being in between the low frequency (20) and the high frequency (21) and an offset frequency (27). Subsequently the availability of a communication re-
source is determined (15) at the scanning frequency (22). A further scanning frequency (22) is determined (16) as a function of the current scanning frequency (22) and the offset frequency (27) and subsequently the availability of a communication resource (25) at the further.scanning frequency (22) is determined if no communication resource (25) is available at the scanning frequency (22) until determination of the availability of a communication resource (25).

FIG 3

EP 2 157 828 A1

**Description**

Technical field of the invention

The present invention relates to wireless communication in general. More particularly, it relates to a method, a communication device, a network node, a communication system, a computer-readable medium and a program element for determining the availability of a communication resource in a frequency spectrum. In particular, it relates to a controlled spectrum scanning that increases the spectrum access efficiency.

Background of the invention

Mobile communication, in particular wireless communication, significantly changed the way individual communication entities within a communication system connect and subsequently communicate with each other.

In wired communication, each entity was connected via at least one wired connection to another entity, thus there was no need to establish a communication connection or communication link with one another, as such a communication connection or communication link already existed.

In wireless mobile communication, such a dedicated communication connection initially has to be established by the entities in communication with one another at some point in time. It may be necessary, that this communication connection is re-established after a certain time, for example because the communication device of a mobile user is moving outside of a coverage area of one communication entity and thus the connected devices are no longer able to communicate or keep the communication link established.

In such a scenario, the mobile communication device of the mobile user would have to access a different communication entity in a perhaps significantly altered access environment.

For example, if a mobile user leaves a certain coverage area with only a few communication devices connected to a communication entity and enters an area with substantially more communication devices connected to a new, similar entity the mobile device may not be able to reuse, parameters of the previous communication like for example a dedicated communication frequency of the allowed communication spectrum.

Accordingly, when negotiating and connecting to a communication entity, dedicated communication parameters like for example a frequency available for communication, would have to be detected and/or assigned for establishing a communication connection.

Flexible spectrum usage may include scenarios where spectrum access entities/communication devices access a part of the spectrum after performing spectrum scanning.

The spectrum access may be performed for example by a base station belonging to a communication operator temporarily borrowing spectrum resources from another communication operator, by non-subscription devices that do not subscribe to a service offered by a communication operator or by subscription devices that perform device to device communication in an infrastructure based system subscribing to services of a communication operator.

Spectrum scanning may be considered to conduct a search for signals over a band or range of frequencies by using a manually or automatically tuned receiver.

This is to enable a communication device to transmit on a clear, thus available frequency, i.e. a no- or low interference frequency, by searching a frequency band and then tuning the communication device to an available portion of that band.

Spectrum scanning may be applicable for a scenario in centralized mode, distributed mode and/or interrupted mode.

However, most spectrum scanning mechanisms may not be considered to contribute to an efficient spectrum access. The efficiency may be considered to be reflected by the time that a communication device requires to find a little used spectrum and by the reliability of the spectrum resource when used.

Normally, communication devices scan for an available spectrum resource or communication resource using their pre-set, default settings. Regularly, the scanning process starts from a lower frequency and continues to higher frequencies.

An according, uncoordinated scanning following a communication device driven default scanning procedure may cause unwanted behaviour:

Long scanning time, especially in a scenario with little communication resources being available, since the communication devices would have to go through the spectrum resources that have been fairly fully used.

High collision probability and spectrum access (this matter may especially be applicable for high bursty traffic), high processing time and a long time delay for the active communications in the spectrum resource.

The usage of spectrum resources may not be efficient, since the resources of a communication device are used non-uniformly, adding a traffic demand to a part of the spectrum that is already operating at its maximum capacity. Thus, the processing time may increase substantially, even exponentially.

It may always be considered beneficial to balance the traffic over spectrum resources.

In J. Luo, et al., "Investigation on Radio Resource Scheduling in WLAN coupled with 3G cellular network", IEEE Communication Magazine, June 2003 the concept of joined radio resource management is described.

In E. Mohyeldin, J. Luo, et al., "Common pilot method enabling a network assisted fast scanning for reconfigurable terminals", WSR 2005, Karlsruhe, 23.-25. March 2006 reconfigurability features in the context of heterogeneous cooperative radio access technologies enabling the utilization of a variety of radio access technologies is described.

There may be a need to determine the availability of a communication resource in a frequency spectrum with enhanced efficiency and reliability.

Summary of the invention

Thus, a method of determining the availability of a communication resource in a frequency domain, a communication device for determining the availability of a communication resource, a network node, a communication system, a computer-readable medium and a program element for determining the availability of a communication resource in a frequency spectrum according to the independent claims may be provided.

According to an exemplary embodiment of the present invention, a method for determining the availability of a communication resource in a frequency spectrum is provided, comprising determining a low frequency, a high frequency, a scanning frequency, the scanning frequency being determined randomly and being between the low frequency and the high frequency, thus laying a range between these frequencies. An offset frequency is determined and the availability of a communication resource at the scanning frequency is determined. Furthermore, a further scanning frequency is determined as a function of the current scanning frequency and the offset frequency. The method further comprises determining the availability of a communication resource at the further scanning frequency if no communication resource is available at the scanning frequency until determination of the availability of a communication resource.

According to another exemplary embodiment of the present invention, a communication device for determining the availability of a communication resource in a frequency spectrum is provided, comprising a determination unit, which is adapted for determining a low frequency, a high frequency, a scanning frequency being determined randomly and being in between the low frequency and the high frequency and an offset frequency, a determination unit for determining the availability of a communication resource at the scanning frequency and a determination unit for determining a further scanning frequency as a function of the current scanning frequency and the offset frequency and determining the availability of a communication resource at the further scanning frequency if no communication resource is available at the scanning frequency until determination of the availability of a communication resource.

According to another exemplary embodiment of the present invention, a network node is provided, being adapted for providing at least one of a low frequency, a high frequency, a scanning frequency, an offset frequency, a prohibited frequency range and a time indicative attribute to a communication device according to the present invention.

According to another exemplary embodiment of the present invention, a communication system is provided, comprising a communication device for determining the availability of a communication resource in a frequency spectrum according to the present invention, the communication device being adapted to carry out the method according to the present invention and a network node according to the present invention.

According to another exemplary embodiment of the present invention, a computer-readable medium is provided in which a computer program for determining the availability of a communication resource in a frequency spectrum is stored, which when being executed by a processor, is adapted to carry out the method according to the present invention.

According to another exemplary embodiment of the present invention, a program element for determining the availability of a communication resource in a frequency spectrum is provided, which, when being executed by a processor, is adapted to carry out the method according to the present invention.

In the following, further embodiments of the present invention are described referring in particular to a method of determining the availability of a communication resource in a frequency spectrum, a communication device for determining the availability of a communication resource in a frequency spectrum, a network node, a communication system, a computer-readable medium and a program element for determining the availability of a communication resource in a frequency spectrum.

However, arbitrary variations and interchanges of single and multiple features between the claimed entities is conceivable and within the scope and disclosure of the present patent application.

The present invention may be considered to propose a controlled spectrum scanning method, which increases the spectrum access efficiency.

The spectrum scanning method is controlled by parameters, which define a spectrum scanning pattern, i.e. how the respective spectrum is scanned, for determining an available communication resource.

The method of determining the availability of a communication resource in a frequency spectrum and the spectrum scanning pattern, respectively, may comprise the following parameters.

A low frequency/lowest spectrum to be scanned.

A high frequency/highest spectrum to be scanned.

A scanning frequency/spectrum scanning starting point in between the low frequency/lowest spectrum and the high frequency/highest spectrum.

An offset frequency/step offset after: each spectrum scanning step, if the scanning was not successful.

Furthermore, an indication of a prohibited frequency range, i.e. a frequency/spectrum range which is not allowed to he scanned, may be indicated as well.

It may be understood, that as in nowadays wireless digital communication systems, a communication may utilize not only a single, dedicated frequency, but rather a frequency band or frequency range having a dedicated bandwidth, thus being a dedicated spectrum having a bandwidth.

A communication resource may be anything that facilitates a communication between at least two communication entities. A communication resource may be a frequency, a frequency band, a spectrum having a bandwidth at a certain frequency band, a single or a bundling of carriers in an Frequency Division Multiple access system (FDM) including OFMDA (orthogonal frequency division multiple access), a communication slot in the time- or frequency-domain in a digital or analogue communication system or spreading codes in a Code Division Multiple Access (CDMA) system. A communication resource may provide a real or virtual communication connection between at least two communication entities.

Determining the availability of a communication resource in a frequency spectrum may as well be understood as scanning a frequency spectrum for a communication resource.

One aspect of the invention may be seen as distributing a spectrum for use with multiple communication devices, in particular distributing communication resources in a spectrum to multiple communication devices with low collision probability.

According to the present invention, a dedicated scanning frequency/spectrum scanning starting point is provided. It is determined, whether a communication resource at this scanning frequency/spectrum scanning starting point is available. In case a communication resource is available, a communication connection may be established.

In case no communication resource is available at the scanning frequency, a next, further, new scanning frequency is to be determined and subsequently scanned for the ability of a communication resource.

For determining the next scanning frequency the current scanning frequency is employed and modified by an offset frequency/step offset.

The offset frequency/step offset may have an arbitrary real value and may present the difference or delta between a current scanning frequency and a further scanning frequency.

The step offset/offset frequency may also represent the smallest single entity between two adjacent, allowed scanning frequencies/spectrum scanning points/spectrum bands.

Also, an employed offset frequency/step offset may be a multiple of said smallest single unit.

The offset frequency/step offset may be added to or subtracted from the current scanning frequency to arrive at a new, further scanning frequency.

A further determination of an availability of a communication resource is performed at the new scanning frequency and may be repeated at least until an available communication resource has been determined.

The present invention may be employed under differing prerequisites or conditions. For example, a primary communication system, which may own dominating spectrum access rights, determines and/or provides at least one parameter of the spectrum scanning pattern.

The present invention may thus provide a high probability to access the spectrum holes, spectrum/communication resources in a spectrum and a low probability of collision with communication resources being unavailable due to the distributed spectrum access over the spectrum/communication resources.

Furthermore, a shorter scanning time and therefore a higher efficiency of spectrum access may be achievable. Additionally, low processing and a high rate of active communications, resulting in decreased energy consumption, eventually resulting in an increased life of a power source, like a battery, accumulator or capacitor, may be obtainable as well.

A communication device may set the scanning parameters randomly or may arrive at new scanning parameters by at least reconfiguring one of the already known scanning parameters of a scanning pattern.

According to a further embodiment of the present invention the method may further comprise determining a prohibited frequency range, such that the scanning frequency is excluded from the prohibited frequency range.

A prohibited frequency range may be a range or band of frequencies, one or a plurality of communication resources, currently unavailable for communication, e.g. already employed for another communication or may be a frequency range excluded from communication per se, e.g. due to restricted access rights for governmental access.

Providing a prohibited frequency range may further increase the efficiency to find an available communication resource by excluding already used frequency bands or frequency bands where no communication would be possible or allowable.

Furthermore, the reliability of the communication system may be improved as well by using or minimizing unwanted interference, for example with already ongoing communication connections.

Also, multiple prohibited frequency ranges may be provided/determined.

According to a further exemplary embodiment of the present invention, the direction of the offset frequency may be determined randomly.

A direction of the offset frequency may be considered to be whether to add to or subtract from the respective offset frequency to or from the scanning frequency.

An according feature may contribute to an enhanced diversity when performing the method on different devices substantially at the same time, thus further enhancing the efficiency of the spectrum scanning method and the reliability of the communication resource when used.

According to a further embodiment of the present invention at least one of the low frequency, the high frequency, the scanning frequency, the offset frequency and the prohibited frequency range may be acquired from an external communication entity.

By receiving an external input, the method according to the present invention may be specifically tailored to currently preceding communication specifications or circumstances to allow for an efficient determination of the availability of a communication resource.

For example, the external communication entity may be aware of at least some of the communication resources currently in use and thus may adapt and provide the prohibited frequency range accordingly.

According to a further embodiment of the present invention at least one of the low frequency, the high frequency, the scanning frequency, the offset frequency and the prohibited frequency range is generated randomly.

This may allow for a complete autonomous operation by scanning all available, reasonable communication resources for their availability. Also it is conceivable, that some elements are considered to be known, e.g. a standardized setting, while others are determined randomly to provide a favourable determination of the availability of a communication resource with minimized connection time and interference.

For example, a low frequency, a high frequency and an offset frequency may be provided in a default manner, i.e. being the default values of a particular communication standard, while the scanning frequency and at least the direction of the offset frequency is determined randomly.

Each "determination path", i.e. the sequence of scanning frequencies, may be considered to be dependent on two random variables, thus being highly uncorrelated to one another.

According to a further embodiment of the present invention, at least one of the low frequency, the high frequency, the scanning frequency, the offset frequency and the prohibited frequency range is reconfigured.

Reconfiguring may be understood as arriving at a new respective value by amending randomly or targeted, at least one element or parameter of the spectrum scanning pattern.

For example, while providing default settings that may cover all possible and conceivable communication situations, it may be favourable to reconfigure elements to reflect a communication situation to a higher degree, thus enhancing efficiency and reliability for the connection and/or for the next determination process.

E.g., a communication device which may employ a large frequency band by default, but may reconfigure at least one of the low frequency and the high frequency, thus narrowing down the possibilities for determining the availability of a communication resource within this band and further reducing determination time.

It is also conceivable, that when no communication resource is determined available in a specific, narrow frequency band, elements may be reconfigured adversely, e.g. thus broadening the frequency band, as well.

According to a further embodiment of the present invention, at least one of the low frequency, the high frequency, the scanning frequency, the offset frequency and the prohibited frequency range is determined according to at least one of a radio access technology, a data traffic type, a data service type, history information and location information.

A radio access technology may be e.g. a communication standard like 3rd Generation standard (3G), 3rd Generation Partnership Project standard (3GPP), Universal Mobile Telecommunication System standard (UMTS), IEEE 802,16 standard, i.e. the Worldwide Interoperability for Microwave Access standard (WiMAX), Long-Term Evolution standard (LTE), Global System for Mobile Communication standard (GMS), Wireless Local Area Network standard (WLAN), and the like.

A data traffic type may comprise a data communication, an audio communication or a video communication. A data traffic type may also comprise an indication regarding a required capacity/bandwidth/data transfer rate of the communication resource thus may be initiating bundling of communication resources or simply adapting the communication resource itself to provide an increased bandwidth.

A data service type may comprise a quality of service (QoS) service indicator, e.g. a minimum data transfer rate and a maximum data transfer time (latency) for providing e.g. a Voice over IP (VoIP) service.

History information may reflect a time dependency (absolute or relative) when determining, randomly generating and/or reconfiguring at least one of the elements of the low frequency, the high frequency, the scanning frequency, the offset frequency and the prohibited frequency range.

Furthermore, location information may also provide adequate basis for an educated determination of at least one of the parameters of the spectrum scanning pattern. Location information may be provided by an external entity, directly or at least indirectly, and/or may further be provided by an independent location determination entity, like for example in a Global Positioning System (GPS) system.

Especially favourable may be the combination of history information and location information, i.e. location dependent history information.

According to a further embodiment of the present invention, a time indicative attribute may be employed for at least partially determining at least one of the low frequency, the high frequency, the scanning frequency, the offset frequency and the prohibited frequency range.

The time indicative attribute may be employed as a (further) quasi-random variable and/or may provide for an educated determination or reconfiguration of at least one of the low frequency, the high frequency, the scanning frequency, the offset frequency and the prohibited frequency range particularly when combined with at least one of the radio access technology, a data traffic type, a data service type, history information and location information.

Furthermore, a time indicative attribute may signal the availability of a communication resource or may allow that a resource, though determined available, to be discarded due to further limitations, like for example being not sufficient compared to a service time.

The communication device may start randomly at a certain scanning frequency, namely a starting point, and may compare the information of the time indicative attribute to the neighbour frequency range.

If the starting point or its neighbourhood fits to the service requirement (i.e. rescanning may only occur with a low probability during a service time), the communication device may commence scanning for an available communication resource from the scanning frequency.

If the scanning frequency does not fit to the service requirement, a further scanning frequency may be generated.

The generation of a further scanning frequency may be repeated until the communication device decides to not continue by comparing a counter to a pre-set value, e.g. one that is determined by the battery lifetime or a certain real-time demand.

If the communication device decides to not continue scanning, the device may start scanning from the last scanning frequency and be ready to interrupt its service due to a further scanning.

According to a further embodiment of the present invention, a communication device may be adapted to at least one of acquire from an external communication entity at least one of the low frequency, the high frequency, the scanning frequency, the offset frequency, a prohibited frequency range and a time indicative attribute; generate randomly at least one of the low frequency, the high frequency, the scanning frequency, the offset frequency, a prohibited frequency range, and a time indicative attribute; reconfigure at least one of the low frequency, the high frequency, the scanning frequency, the offset frequency, a prohibited frequency range and a time indicative attribute; determine at least one of the low frequency, the high frequency, the scanning frequency, the offset frequency, a prohibited frequency range and a time indicative attribute according to at least one of a radio access technology, a data traffic type, a data service type, history information and location information; and determine the direction of the offset frequency randomly.

According to a further embodiment of the present invention, the time indicative attribute may be employed for determining at least a part of at least one of the low frequency, the high frequency, the scanning frequency, the offset frequency and the prohibited frequency range.

It is also to be noted that embodiments and aspects of the present invention have been described with respect to different subject-matters.

In particular, some embodiments have been described with reference to apparatus type claims whereas other embodiments have been described with reference to method type claims. However, a person skilled in the art will gather from the above and the following description that unless notified in addition to any combination features belonging to one type of subject-matter also any combination between features relating to different subject-matters, in particular between features of apparatus claims and features of method claims is considered to be disclosed with this application.

These and other aspects of the present invention will become apparent from and elucidated with reference to the embodiments described hereinafter.

Exemplary embodiments of the present invention will be described below with reference to the following drawings.

The illustration in the drawings is schematic. In different drawings, similar or identical elements are provided with the similar or identical reference numerals.

Figures are not drawn to scale, however, may depict qualitative proportions.

Brief description of the drawings

Fig. 1 shows    an exemplary embodiment of the method of determining the availability of a communication resource in a frequency spectrum according to the present invention,

Fig. 2 shows an exemplary embodiment of a communication system comprising a network node and a communication device according to the present invention,

Fig. 3 shows an exemplary determination of availability of a communication resource according to the present invention, and

Fig. 4 shows an exemplary scanning start point generation comprising time stamp information according to the present invention.

Detailed description

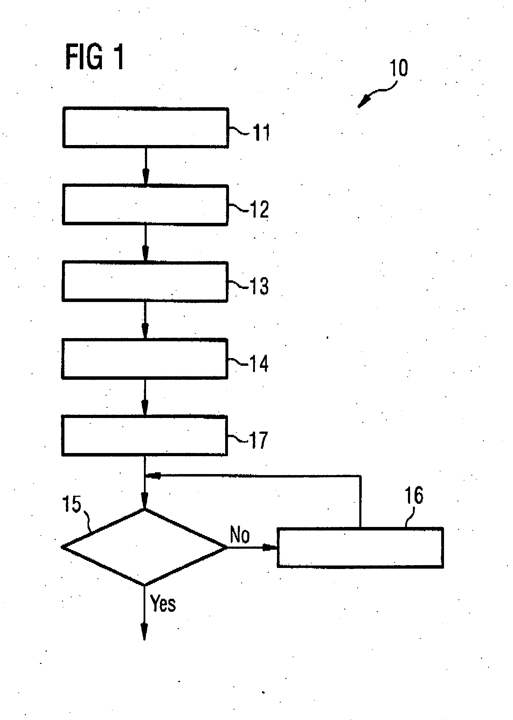

Now referring to Fig. 1, an exemplary embodiment of the method of determining the availability of a communication resource in a frequency spectrum according to the present invention is depicted.

The method 10 comprises the steps of determining 11 a low frequency 20, determining 12 a high frequency 21, determining 13 a scanning frequency 22. The scanning frequency 22 is determined randomly and is in between the low frequency 20 and the high frequency 21. The scanning frequency 22 may either be the low frequency 20 or the high frequency 21 as well. Thus, the scanning frequency is determined in a range between the low frequency and the high frequency.

Random determination of the scanning frequency 22 in the range between the low frequency 20 and the high frequency 21 is to be understood as obtaining a scanning frequency 22 that is chosen arbitrarily and in particular not dependent on any further element. The randomly determined scanning frequency 22 may be set to the nearest standardized frequency used in a particular communication scenario, thus rounded up or down.

For example, if the low frequency 20 in a particular communication system is considered to be 890 MHz and the high frequency 21 is considered to be 915 MHz with 1 MHz being the individual step (offset frequency 27) between adjacent frequencies, then determining a random scanning frequency 22 of 900,8 MHz may result in utilizing 901 MHz.

Subsequently, the step of determining 14 an offset frequency 27 is performed. However, it may be conceivable as well to (at least at this point) omit the determination 14 of an offset frequency 27. This might be due to that when the first determination 15 of availability of a communication resource 25 at the scanning frequency 22 is successful, then this determined frequency may be used for communication, and subsequently an offset frequency 27 would not be required at all.

As a next step, determining 17 a prohibited frequency range such that the scanning frequency 22 is excluded from the prohibited frequency range, is depicted. This step of determining 17 a prohibited frequency range may be considered to be optional, since in the case, that a continuous frequency spectrum is provided, a prohibited frequency range may not exist at all. Thus, an according prohibited frequency range may not have to be determined. Contrary hereto, it is conceivable to also determine multiple prohibited frequency ranges as well.

A communication resource 25 may be considered to be, for example, a time slot or a frequency slot in a time division (TD) multiplexing or frequency division (FD) multiplexing system, respectively. Further communication resources according to further communication and/or coding/modulation standards are conceivable as well.

Following, the step of determining 15 the availability of a communication resource 25 at the scanning frequency 22 is performed.

In case that it has been determined that no communication resource 25 is available at the (current) scanning frequency 22 a further scanning frequency 22 is determined 16. The further scanning frequency 22 is a function of the current scanning frequency 22 and the offset frequency 27. The offset frequency 27 may be added to or subtracted from the scanning frequency 22, thus arriving at a further scanning frequency 22. The direction of the offset frequency 27, i.e. whether to add or subtract the offset frequency 25 may be determined as well in a further step, not depicted in Fig. 1, or even within the step of determining 14 an offset frequency 27. The direction of the offset frequency 27 may be determined randomly as well.

The offset frequency 27 may also be considered to be a distance in the frequency domain between adjacent communication frequencies.

Following, it may be conceivable as well to add or subtract a multiple of the offset frequency 27, like 2x, 3x, etc. the offset frequency 27.

After a further scanning frequency 22 has been determined 16 the step of determining 15 the availability of a communication resource 25 is repeated with the new, further scanning frequency 22 as the (current) scanning frequency 22.

The determination 15 of the availability of a communication resource 25 may be repeated a pre-set amount of times, a preset time limit may be employed or the determination 15 may be repeated until the availability of the communication resource 25 has been determined.

The determination itself may be carried out in various ways.

Determination may be interpreted as acquiring from an external communication entity, for example by wireless or wired transmission, may comprise generating randomly, e.g. within a single, particular device or may comprise reconfiguring of old elements or parameters like low frequency 20, high frequency 21, scanning frequency 22, offset frequency 27 and prohibited frequency range to arrive at a new value.

It is conceivable as well, that an arbitrary mixture of the aforementioned ways of determination is performed.

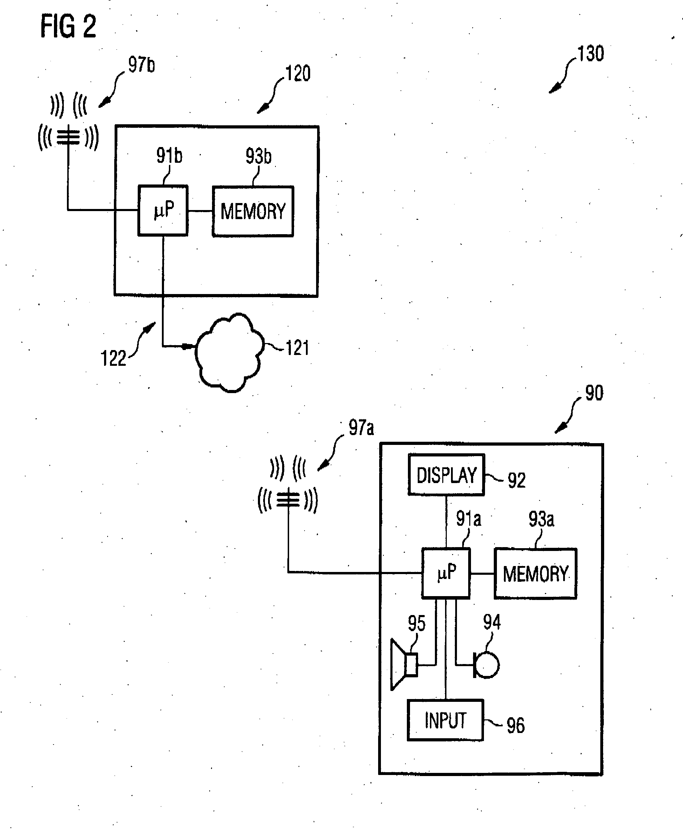

Now referring to Fig. 2, an exemplary embodiment of a communication system comprising a network node and a communication device according to the present invention is depicted.

The communication system 130 comprises the network node 120 and the communication device 90. The network node 120 comprises, in this exemplary embodiment, a sending and receiving unit 97b, e.g. an antenna, a computing device 91b, e.g. a microprocessor, and a memory unit 93b.

The network node 120 also comprises a further link 122 to a communication network 121. The communication device 90 also comprises, in this exemplary embodiment, a computing unit 91a e.g. a microprocessor.

Connected to the microprocessor 91a is, in this exemplary embodiment, a sending and receiving unit 97a, a display unit 92, a memory unit 93a, a microphone 94, a speaker 95 and an input unit 96.

The communication device 90 may want to establish a communication link with the communication network 121 via the network node 120.

To obtain an according communication connection, an available communication resource 25 is required in order to, at least virtually, connect the communication device 90 and the network node 120.

The determination units of the communication device 90 are all incorporated within the microprocessor 91, executing program code stored in memory 93a. However, it is also conceivable that the determination units are one or more discrete units.

For determination of the availability of a communication resource 25, multiple parameters are required by the communication device 90. The parameters may be provided to the communication device in different modes.

The parameters may be provided in a network centric mode.

The network of a primary spectrum user e.g. a communication provider, to whom the network node 120 is associated with, informs a secondary terminal, e.g. the mobile device 90, about the spectrum scanning pattern parameters, e.g. at least one of low frequency, 20, the high frequency 21, the scanning frequency 22, the offset frequency 27 and the prohibited frequency range. Furthermore, a time indicative attribute may be provided as well.

The parameters may be based on a certain traffic or service type in a certain spectrum band, thus allowing to direct a certain type of traffic to a particular, preset band for e.g. interference mitigation or load balancing reasons.

Parameters may be provided by a modelled communication traffic by using on/off periods and/or burst rates. Traffic information, in particular in terms of arrival rate and departure rate with its distribution, may also be provided to the mobile device 90.

A communication entity may assign a certain spectrum resource or communication resource 25 to traffic with similar behaviour in order to assist scanning.

Communication device 90 may adjust its communication behaviour (including requirements regarding transfer rate and bit error rate (e.g. scalable source coding)) according to traffic pattern information provided by the communication entity.

A communication device 90 scanning for a communication resource 25 may be searching for spectrum holes. The time how long a spectrum hole is available may depend on the traffic in a certain spectrum (i.e. traffic pattern, on/off time, burst arriving rate etc.).

If a device has to deliver a certain type of service, it may adjust the transfer to a certain spectrum band preferred for that service.

A network operator or primary spectrum provider may allocate communication resources 25 of certain.services to specific parts of a spectrum, e.g. due to interference control or power management reasons.

For example, high data traffic may be performed near a network node 120 or communication entity with a certain part of spectrum, whereas low data traffic further away from the network node may be performed in another part of the spectrum. This may allow to reuse different parts of the spectrum by another (adjacent) network node 120 with little or no interference.

It is preferred that a scanning pattern, the individual parameters of the scanning pattern, may be individually transmitted to the mobile device 90. For this, a full cooperation between the network node 120 and the communication device 90 may be required.

Broadcasting at least one of the required parameters to a multitude of communication devices 90 within the coverage area of.the broadcast is conceivable as well.

For example, a network node 120 may provide a lowest spectrum to scan/a low frequency 20, a highest spectrum to scan/a high frequency 21, a spectrum range not allowed to be scanned/a prohibit frequency range and a random number $R_S$ as a step offset/offset frequency 27 in real value after each spectrum scanning step, with $0 \leq R_S \leq 1$.

Following the mobile device may generate a further random number r.

The direction of the step offset/the offset frequency 27 ($\Delta f$) may be set to $\Delta f < 0$, in case $r < R_S$, and may be

set to $\Delta f > 0$, in case $r \geq R_S$.

An according implementation may even allow the network node 120 to control, at least to some extent, the direction of the offset frequency 27.

Furthermore, a second random number $\alpha$ may be generated by the mobile device, with $0 \leq \alpha \leq 1$. The scanning starting point/scanning frequency 22 may be acquired by the formula

```
scanning frequency 22 =

low frequency 20 + (high frequency 21 - low frequency 20) *

α
```

In case a spectrum range not allowed to be scanned/a prohibited frequency range was provided and the scanning starting point/the scanning frequency 22 is within the prohibited frequency range, a new random number a may be generated, thus resulting in a new scanning frequency 22.

Furthermore, the communication device 90 may be in a terminal driven/auto configuration mode.

In case the communication device 90 is unable to receive the scanning pattern parameters from an external entity or chooses to generate the parameters randomly by itself, the communication device 90 needs to randomly set their scanning frequency 22 as well as the direction of the offset frequency 27. Since each communication device 90 may be considered to employ two independent parameters, r and $\alpha$, the "scanning tracks" between communication devices 90 may be considered to be independent.

Accordingly, the collision probability is considered to decrease as well.

Furthermore, the communication device 90 may employ history information to set at least one of the parameters of the scanning pattern.

The communication device 90 may also use a traffic pattern detection to determine the need for a certain traffic or service.

E.g. if an according need has been determined, the communication device 90 may set individual parameters of the scanning pattern so that the scanning pattern parameters may direct the Communication device 90 to connect in those spectrum bands which may be favourable for a certain type of traffic or service.

Furthermore, a reconfiguration of the spectrum scanning pattern may be performed.

Since the spectrum environment may experience dynamic alterations, e.g. by entering or leaving the coverage area of a network node 120 or simply by moving of the communication device 90 within a coverage area of a network node 120, it may be required for the spectrum scanning pattern to be reconfigured accordingly.

After each alteration within the spectrum environment or after each network allocation of the primary spectrum, e.g. removing or adding spectrum carriers shared with other operators, or dedicating an amount of spectrum resources to high priority service such as broadcasting messages, or reassignment of spectrum resources among Wide Area and local area cells inside a primary system, the scanning pattern parameters may be reconfigured by the network node 120 and/or the communication device 90.

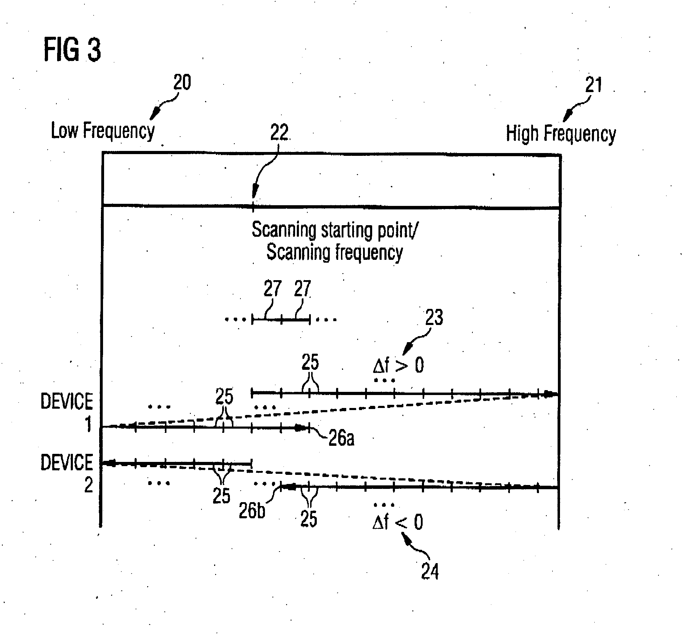

Now referring to Fig. 3, an exemplary detection of availability of a communication resource according to the present invention is depicted.

An exemplary frequency spectrum is depicted in Fig. 3, having a low frequency 20 (fl) and a high frequency 21 (fh). An arbitrary, random scanning starting point/scanning frequency 22 (fs) is determined, as previously described. Two communication devices 90 (device 1 and device 2) are trying to establish a communication link, thus requiring a communication resource 25 being available. Individual spectrum resources/communication resources 25 are depicted as well in Fig. 3.

As per example, both device 1 and device 2 have determined the same scanning frequency 22. However, device 1 has determined an offset frequency 27 ($\Delta t$) in the positive direction 23 whereas the offset frequency 27 ($\Delta f$) of device 2 is in the negative direction 24.

Device 1 is consecutively trying to determine the availability of a communication resource 25 by increasing the scanning frequency 22 in the direction of the high frequency 21. When reaching the high frequency 21, the highest possible/allowed frequency, device 1 continues to determine the availability of a communication resource 25 starting from the low frequency 20 again in the positive, increasing direction 23.

It is even b conceivable that device 1 passes its initial scanning frequency 22, like depicted in Fig. 3. In this particular case, no communication resource was available during the first pass when determining the availability of a communication resource 25, requiring device 1 to once again pass the initial scanning frequency 22. Eventually, device 1 determines a communication resource 25 to be available at 26a.

Communication device 2 is decreasing 24 the scanning frequency 22 until reaching the low frequency 20 and thus commencing the determination at the high frequency 21, again lowering 24 the scanning frequency 22 from scanning step to step, until determining the availability of a communication resource 26b.

With both device 1 and device 2, a new, further scanning frequency 22 (fs') may be determined by the following formulas

$$\texttt{fs' = fs + (}\Delta\texttt{f}\cdot\texttt{t)*mod(fh-fl)}$$

t may be considered to be a factor of either "1" or "-1", thus representing the direction 23,24 of the offset frequency 27.

"1" may represent a positive, increasing direction 23 to higher frequencies, whereas "-1" may represent a negative, decreasing direction 24 to lower frequencies thus being an indicator for the algebraic sign, thus the direction, of the offset frequency 27.

Mod() is the well-known mathematical modulo-operation.

$\Delta$f may be a real number.

In case the new scanning frequency 22 is either higher than the high frequency 21 or lower than the low frequency 20, a new, further scanning frequency 22 is determined by the following equations:

$$\texttt{If fs' > fh then fs = fs' - fh + fl;}$$

$$\texttt{If fs' < fl then fs = fh - fl + fs';}$$

$$\texttt{else fs = fs';}$$

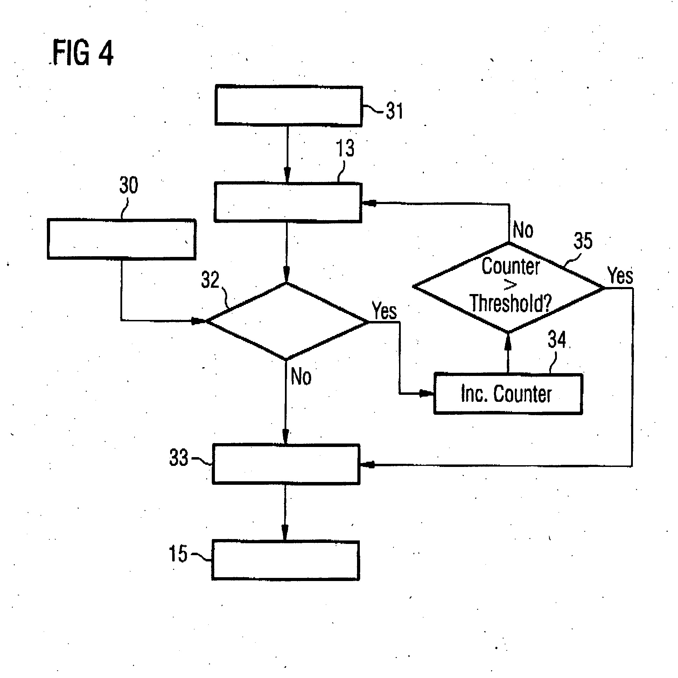

Now referring to Fig. 4, an exemplary scanning start point generation comprising time stamp information according to the present invention is depicted.

Besides at least one of the scanning pattern parameters, the network node may send time stamp information in addition to each spectrum unit, i.e. a non-separable spectrum resource or communication resource according to the scalability limited by a primary system) for scanning, with the configuration of the scanning frequency 22 and the offset frequency 27 being performed according to Fig. 4. The spectrum unit may provide (exact) frequency information that may be smaller or bigger than the scanning capability that a communication device determines for the frequency response at a single time instance.

A service/application profile 30 is provided, specifying the required communication resource 25. In particular, band width or quality of service requirements may be indicated which have to be met.

Scanning pattern parameters and a time stamp vector of spectrum units is acquired by the communication device 90 in step 31.

Following, a scanning frequency 22 is determined randomly 13 as previously described.

In step 32, it is determined whether the service time, i.e. the time needed to perform the transmission, which may be the time needed for a single packet or a complete service session, is larger than the maximum neighbourhood time stamp, i.e. the maximum time stamp value in the amount of time stamp values associated to the neighbour spectrum units around the starting point), indicated by the network.

In case the service time is larger than the maximum neighbourhood time stamp, a counter is increased in step 34.

In step 35, the current counter is compared to a threshold value.

In case the threshold value is not exceeded by the counter, a further random scanning frequency 22 is determined/generated by the communication device 90.

Step 32 is repeated once more.

In case either the service time is smaller or equal to the maximum neighbourhood time stamp indicated by the network or the counter equals the threshold value, the offset frequency 27 is set to maximum in step 33.

Setting the offset frequency to the maximum results in leaving a particular starting point or scanning frequency and arriving at a different scanning frequency either above or below the initial scanning frequency.

In both cases of leaving the initial neighbourhood, the determination of the availability of a network resource 25 is started in step 15.

It should be noted that the term "comprising" does not exclude other elements or steps and that "a" or "an" does not exclude a plurality. Also elements described in association with different embodiments may be combined.

It should also be noted, that reference signs in the claims shall not be construed as limiting the scope of the claims.

A computer-readable medium may be a floppy disk, a harddisk, an USB (Universal Serial Bus) storage device, a RAM (Read Access Memory), a ROM (Read Only Memory) and an EPROM (Erasable Programmable Read Only Memory). A computer-readable medium may also be a data communication network, e.g. the Internet, which allows downloading a program code.

List of reference numbers

**[0176]**

| | |
|---|---|
| 10 | Method of determining the availability of a communication resource in a frequency spectrum |
| 11 | Step: Determining a low frequency |
| 12 | Step: Determining a high frequency |
| 13 | Step: Determining a scanning frequency randomly |
| 14 | Step: Determining an offset frequency |
| 15 | Step: Determining the availability of a communication resource at the scanning frequency |
| 16 | Step: Determining a further scanning frequency |
| 17 | Step: Determining a prohibited frequency range |
| 20 | Low frequency |
| 21 | High frequency |
| 22 | Scanning frequency |
| 23 | Positive direction of offset frequency |
| 24 | Negative direction of offset frequency |
| 25 | Communication resource |
| 26a,b | Communication resource available |
| 27 | offset frequency |
| 30 | Service/application profile |
| 31 | Step: Scanning pattern parameters and time stamp vector of spectrum units determined by communication device |
| 32 | Step: Service time > maximum neighbourhood time stamp indicated by network node |
| 33 | Step: Setting offset frequency to maximum |
| 34 | Step: Increase counter |
| 35 | Step: Compare counter to threshold value |
| 90 | Communication device |
| 91a,b | Microprocessor |
| 92 | Display unit |
| 93a,b | Memory unit |
| 94 | Microphone |
| 95 | Speaker |
| 96 | Input unit |
| 97a,b | Sending and receiving unit/Antenna |
| 120 | Network node |
| 121 | Communication network |
| 122 | Link |
| 130 | Communication system |

**Claims**

1.  Method (10) of determining the availability of a communication resource in a frequency spectrum, comprising:
    determining
    a low frequency (20);
    a high frequency (21);

a scanning frequency (22) being determined randomly and being in between the low frequency and the high frequency; and

an offset frequency (27);

determining (15) the availability of a communication resource (25) at the scanning frequency (22); and

determining (16) a further scanning frequency (22) as a function of the current scanning frequency (22) and the offset frequency (27) and determining (15) the availability of a communication resource (25) at the further scanning frequency (22) if no communication resource (25) is available at the scanning frequency (22) until determination of the availability of a communication resource.

2. Method according to claim 1, further comprising determining (17) a prohibited frequency range such that the scanning frequency (22) is excluded from the prohibited frequency range.

3. Method according to claim 2, further comprising determining the direction (23,24) of the offset frequency (27) randomly.

4. Method according to one of claims 1 to 3, further comprising
   acquiring from an external communication entity (120) at least one of the low frequency (20), the high frequency (21), the scanning frequency (22), the offset frequency (27) and the prohibited frequency range.

5. Method according to one of claims 1 to 3, further comprising
   generating randomly at least one of the low frequency (20), the high frequency (21), the scanning frequency (22), the offset frequency (27) and the prohibited frequency range.

6. Method according to one of claims 1 to 5, further comprising
   reconfiguring of at least one of the low frequency (20), the high frequency (21), the scanning frequency (22), the offset frequency (27) and the prohibited frequency range.

7. Method according to one of claims 1 to 6, further comprising
   determining at least one of the low frequency (20), the high frequency (21), the scanning frequency (22), the offset frequency (27) and the prohibited frequency range according to at least one of a radio access technology, a data traffic type, a data service type, history information and location information.

8. Method according to one of claims 1 to 7, further comprising
   employing a time-indicative attribute for at least partially determining least one of the low frequency (20), the high frequency (21), the scanning frequency (22), the offset frequency (25) and the prohibited frequency range.

9. Communication device (90) for determining the availability of a communication resource in a frequency spectrum, comprising
   a determination unit (91a,93a) for determining
   a low frequency (20);
   a high frequency (21);
   a scanning frequency (22) being determined randomly and being in between the low frequency (20) and the high frequency (21); and
   an offset frequency (27);
   a determination unit (91a,93a) for determining (15) the availability of a communication resource (25) at the scanning frequency (22); and ,
   a determination unit (91a,93a) for determining (16) a further scanning frequency (22) as a function of the current scanning frequency (22) and the offset frequency (27) and determining (15) the availability of a communication resource (25) at the further scanning frequency (22) if no communication resource (25) is available at the scanning frequency (22) until determination of the availability of a communication resource.

10. Communication device according to claim 9, adapted to at least one of
    acquire from an external communication entity at least one of the low frequency (20), the high frequency (21), the scanning frequency (22), the offset frequency (27), a prohibited frequency range and a time-indicative attribute;
    generate randomly at least one of the low frequency (20), the high frequency (21), the scanning frequency (22), the offset frequency (27), a prohibited frequency range and a time-indicative attribute;
    reconfigure at least one of the low frequency (20), the high frequency (21), the scanning frequency (22), the offset frequency (27), a prohibited frequency range and a time-indicative attribute;

determine at least one of the low frequency (20), the high frequency (21), the scanning frequency (22), the offset frequency (27), a prohibited frequency range and

a time-indicative attribute according to at least one of a radio access technology, a data traffic type, a data service type, history information and location information; and

determine the direction (23,24) of the offset frequency (27) randomly.

11. Communication device according to claim 9 or 10, wherein the time-indicative attribute is employed for determining least a part of at least one of the low frequency (20), the high frequency (21), the scanning frequency (22), the offset frequency (27) and the prohibited frequency range.

12. Network node (120), being adapted for providing at least one of a low frequency (20), a high frequency (21), a scanning frequency (22), an offset frequency (27), a prohibited frequency range and a time-indicative attribute to a communication device (90) according to one of the claims 9 to 11.

13. Communication system (130), comprising
a communication device (90) for determining the availability of a communication resource in a frequency spectrum according to one of the claims 9 to 11, adapted to carry out the method (10) according to one of claims 1 to 8; and
a network node (120) according to claim 12.

14. A computer-readable medium, in which a computer program for determining the availability of a communication resource in a frequency spectrum is stored, which, when being executed by a processor, is adapted to carry out the method according to at least one of claims 1 to 8.

15. A program element for determining the availability of a communication resource in a frequency spectrum, which, when being executed by a processor, is adapted to carry out the method according to at least one of claims 1 to 8.

FIG 1

10

11

12

13

14

17

15

16

No

Yes

FIG 2

# FIG 3

FIG 4

31

13

30

32

No

Counter
>
Threshold?

35

Yes

Yes

No

34

Inc. Counter

33

15

**EUROPEAN SEARCH REPORT**

Application Number

EP 08 01 4619

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/202867 A1 (WALTHO ALAN E [US] ET AL) 30 August 2007 (2007-08-30) | 1,3,5-7, 9,13-15 | INV. H04W74/08 |
| Y | * paragraphs [0004], [0008], [0011], [0014], [0015], [0021], [0022], [0030]; figure 3 * | 2,4 | |
| A | | 8,10-12 | |
| | ----- | | |
| Y | EP 1 740 001 A (RES IN MOTION LTD [CA]) 3 January 2007 (2007-01-03) | 2 | |
| A | * sentence 27, paragraph 24 - sentence 42 * | 1,3-15 | |
| | * paragraph [0034]; claim 17 * | | |
| | ----- | | |
| Y | DE 10 2005 042536 A1 (SIEMENS AG [DE]) 15 March 2007 (2007-03-15) | 4 | |
| A | * paragraph [0011] * | 1-3,5-15 | |
| | * abstract; claim 1 * | | |
| | ----- | | |

TECHNICAL FIELDS
SEARCHED      (IPC)

H04W
H04L

The present search report has been drawn up for all claims

| Place of search | Date of completion of the search | Examiner |
|---|---|---|
| The Hague | 9 February 2009 | Orfanos, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 01 4619

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2009

| Patent document cited in search report | Publication date | Patent family member(s) | | Publication date |
|---|---|---|---|---|
| US 2007202867 A1 | 30-08-2007 | WO | 2007100809 A2 | 07-09-2007 |
| EP 1740001 A | 03-01-2007 | AT | 389305 T | 15-03-2008 |
| | | AU | 2006202767 A1 | 18-01-2007 |
| | | CA | 2551238 A1 | 01-01-2007 |
| | | CN | 1942011 A | 04-04-2007 |
| | | EP | 1853076 A1 | 07-11-2007 |
| | | EP | 1833272 A1 | 12-09-2007 |
| | | ES | 2302146 T3 | 01-07-2008 |
| | | JP | 2007013989 A | 18-01-2007 |
| | | KR | 20070003715 A | 05-01-2007 |
| | | SG | 128663 A1 | 30-01-2007 |
| DE 102005042536 A1 | 15-03-2007 | CN | 101341772 A | 07-01-2009 |
| | | EP | 1927256 A1 | 04-06-2008 |
| | | WO | 2007028717 A1 | 15-03-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. Luo et al.** Investigation on Radio Resource Scheduling in WLAN coupled with 3G cellular network. *IEEE Communication Magazine,* June 2003

- **E. Mohyeldin ; J. Luo et al.** Common pilot method enabling a network assisted fast scanning for reconfigurable terminals. *WSR,* 2005